# EUROPÄISCHE PATENTANMELDUNG

(11) **EP 3 407 274 A1**
(43) Veröffentlichungstag der Anmeldung: **28.11.2018**
(21) Anmeldenummer: 17172810.8
(22) Anmeldetag: 24.05.2017
(51) Int. Cl.: G06Q 10/06

(54) **PLANUNGS- UND ENGINEERING-WERKZEUG FÜR EINE VERFAHRENS- ODER PROZESSTECHNISCHE ANLAGE**

(71) Anmelder: Siemens Aktiengesellschaft, 80333 München (DE)
(72) Erfinder: Drumm, Oliver, 76344 Eggenstein-Leopoldshafen (DE); Lutz, Benjamin, 76327 Pfinztal (DE); Wolf, Gerrit, 76187 Karlsruhe (DE)

(57) **Zusammenfassung**

Im Rahmen einer Anlagenplanung steht gewöhnlich der reine Produktionsprozess der Anlage im Vordergrund, wobei zu berücksichtigen ist, dass der Produktionsprozess im optimalen Arbeitspunkt zu betreiben ist. Das besondere Augenmerk auf den Betrieb der Anlage im optimalen Arbeitspunkt bedeutet allerdings, dass Expertenwissen eines Anlagenfahrers - z. B. das Wissen über durch störende Prozesseinflüsse verursachte Geräusche und Warnhinweise während des Anlagenbetriebs - im Rahmen der Anlagenplanung gar nicht oder nur unzureichend berücksichtigt wird. Es wird ein Planungs- und Engineering-Werkzeug für eine verfahrens- oder prozesstechnische Anlage vorgeschlagen, das ermöglicht, Expertenwissen eines Anlagenfahrers im Rahmen der Anlagenplanung zu berücksichtigen.

## Beschreibung

Die Erfindung betrifft ein Planungs- und Engineering-Werkzeug für eine verfahrens- oder prozesstechnische Anlage.

Im Rahmen einer Anlagenplanung steht gewöhnlich der reine Produktionsprozess der Anlage im Vordergrund, wobei zu berücksichtigen ist, dass der Produktionsprozess im optimalen Arbeitspunkt zu betreiben ist. Das besondere Augenmerk auf den Betrieb der Anlage im optimalen Arbeitspunkt - wobei vorausgesetzt wird, dass die Anlagenkomponenten stets funktionsfähig sind - bedeutet allerdings, dass Expertenwissen eines Anlagenfahrers während der Planung gar nicht oder nur unzureichend berücksichtigt wird.

Ein erfahrener Anlagenfahrer weiß gewöhnlich nämlich genau, welche durch störende Prozesseinflüsse verursachte Geräusche und Warnhinweise während des Betriebs der Anlage von Bedeutung sind, um rechtzeitig Gegenmaßnahmen bei einer drohenden Havarie einleiten zu können. Störende Prozesseinflüsse, z. B. bei der Fermentation in einer pharmazeutischen Anlage, sind beispielsweise Witterungsbedingungen, Vibrationen an Gehäusen, Temperaturmessungen an Gehäusen oder auch der Ausfall der Klimaanlage der Anlage.

Aufgrund dessen, dass dieses Wissen gar nicht oder nur unzureichend im Rahmen der Anlagenplanung berücksichtigt wird, können die Anlagenkomponenten redundant ausgebildet werden, um die Ausfallsicherheit der Anlage zu erhöhen. Dies bedeutet allerdings ein Mehraufwand an Komponenten und eine Kostenerhöhung.

Der vorliegenden Erfindung liegt daher die Aufgabe zugrunde, ein Planungs- und Engineering-Werkzeug für eine verfahrens- oder prozesstechnische Anlage zu schaffen, das ermöglicht, Expertenwissen eines Anlagenfahrers im Rahmen der Anlagenplanung zu berücksichtigen.

Diese Aufgabe wird durch die im Anspruch 1 angegebenen Maßnahmen gelöst.

Vorteilhaft ist, dass bereits während der Planung festgelegt werden kann, wie die während des Anlagenbetriebs verfügbaren und "verteilten" Sensorwerte für eine Diagnose bzw. für eine Zustandsüberwachung (Condition Monitoring) der Anlagenkomponente zu verknüpfen sind, wobei darüber hinaus für die Verknüpfung auch Umrechnungen und Transformationen definierbar sind.

Das Verknüpfungsergebnis wird über eine Schnittstelle des Zustandsüberwachungs- bzw. Diagnose-Knotens einer übergeordneten Einheit zugeführt, der Verknüpfungsergebnisse von Zustandsüberwachungs- bzw. Diagnose-Knoten weiterer Anlagenkomponenten beispielsweise für diverse Diagnoseansichten übermittelt werden können.

Ferner erhöht die integrierte Zustandsüberwachung die Anlagenverfügbarkeit, weil Stillstandszeiten verringert werden und darüber hinaus wird die Lagerhaltung von Ersatzteilen optimiert, weil die Ausfallvorhersage verbessert werden kann.

In einer Ausgestaltung der Erfindung ist das Planungs- und Engineering-Werkzeug dazu ausgebildet, in einem Rohrleitungs- und Instrumentierungsdiagramm der Anlage, in welchem die für den Betrieb der Anlage erforderlichen Anlagenkomponente und deren Verbindungen symbolisch dargestellt sind, die Symbole für die den Referenzen zuzuordnenden Sensoren zu selektieren. Dadurch kann ein Anwender mit einfachen Mitteln die Sensoren auswählen, die der Anwender für die Diagnose in Betracht ziehen möchte. Ein derartiges Rohrleitungs- und Instrumentierungsdiagramm (R&I-Fließschema, Rohrleitungs- und Instrumentenfleißschema) kann mittels des Planungs- und Engineering-Werkzeugs oder z. B. mittels einem von der Anmelderin unter dem Namen "COMOS" vertrieben Software-Werkzeug erstellt werden.

In einer weiteren Ausgestaltung der Erfindung sind die selektierbaren Sensoren vorgesehen zur Erfassung der Umgebungstemperatur der Anlagenkomponente, der Umgebungsluftfeuchtigkeit der Anlagenkomponente, der Vibration der Anlagenkomponente, der Drehzahl der Anlagenkomponente und/oder der Temperatur eines Prozessmediums. Dabei können für den Anlagenbetrieb erforderliche Sensoren sowie weitere nicht für den Anlagenbetrieb sondern "nur" für die Diagnose einer Anlagenkomponente zu berücksichtigende bzw. erforderliche Sensoren - z. B. zur Erfassung der Vibration dieser Anlagenkomponente - ausgewählt werden.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figur 1: ein Ausschnitt eines Rohrleitungs- und Instrumentierungsdiagramms mit einer Instanz eines virtuellen Diagnose-Knotens,
- Figur 2: eine Liste einer Instanz eines virtuellen Diagnose-Knotens,
- Figur 3: ein Objektmodell eines virtuellen Diagnose-Knotens, und
- Figur 4: eine Automatisierungseinrichtung.

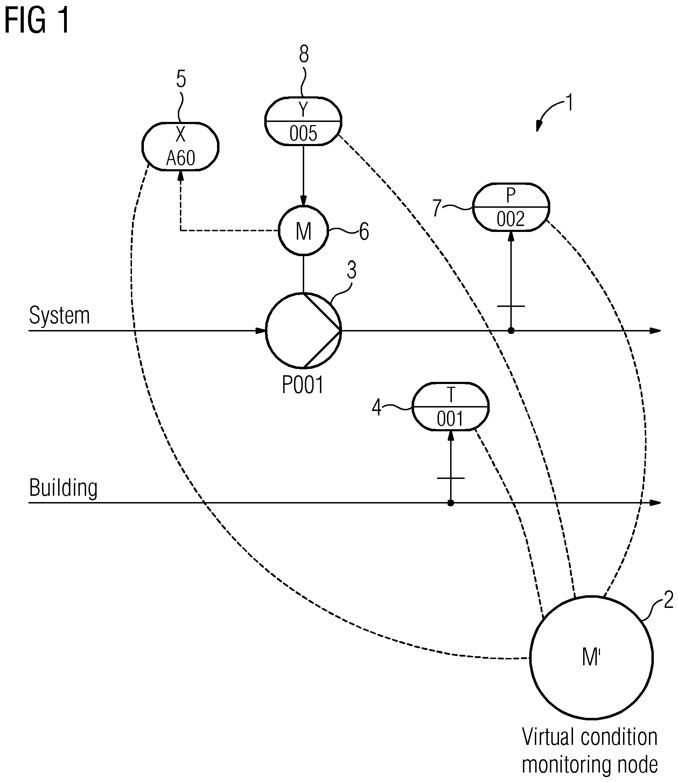

Die in den Figuren 1 bis 4 dargestellten gleichen Teile sind mit gleichen Bezugszeichen versehen.

In Figur 1 ist ein Ausschnitt eines von einem Anwender bzw. Verfahrenstechniker mittels eines Planungswerkzeugs erstelltes Rohrleitungs- und Instrumentierungsdiagramm 1 gezeigt. In diesem Rohrleitungs- und Instrumentierungsdiagramm 1 sind die für den Betrieb der Anlage erforderlichen Anlagenkomponente und deren Verbindungen symbolisch dargestellt, wobei das Planungswerkzeug ferner dazu ausgebildet ist, zur Diagnose der Anlagenkomponenten jeweils eine Instanz eines virtuellen Zustandsüberwachungs-Knotens (Diagnose-Knoten) zu erstellen. Die Instanzen sind in ein zur Prozessbeobachtung und zur Prozessführung vorgesehenes Bedien- und Beobachtungs-System (OS-System) oder in ein Automatisierungsgerät ladbar, welches die Instanzen während der Prozesssteuerung bzw. während des Anlagenbetriebs ein Steuerprogramm verarbeitet.

Im vorliegenden Ausführungsbeispiel ist vorgesehen, dass der Zustand einer Anlagenkomponente in Form einer Pumpe zu überwachen ist, wobei dazu der Anwender mittels des Planungswerkzeugs aus einem Objekttyp "virtueller Diagnose-Knoten" eine Instanz 2 anlegt und darüber hinaus Symbole der Anlagenkomponenten im Rohrleitungs- und Instrumentierungsdiagramm 1 selektiert. Dabei selektiert der Anwender ein die Pumpe repräsentierendes Symbol sowie die Symbole der Sensoren, die der Anwender als relevant für die Diagnose der Pumpe erachtet bzw. einstuft. Aufgrund der die Sensoren repräsentierenden selektierten Symbole, ordnet das Planungswerkzeug diesen Sensoren Referenzen einer Referenzliste zu, wobei während der Prozesssteuerung bzw. während des Anlagenbetriebs - also nach der Anlagenplanung - die Sensorwerte dieser Sensoren in die Referenzen hinterlegt werden.

Im Folgenden wird sowohl für einen Sensor als auch für ein Symbol, das den Sensor repräsentiert, der Einfachheit halber der Begriff "Sensor" verwendet. Entsprechendes gilt für die weiteren Komponenten und deren Symbole, z. B. wird für eine Pumpe und für ein Symbol, das diese Pumpe in dem Rohrleitungs- und Instrumentierungsdiagramm 1 widerspiegelt, der Begriff "Pumpe" verwendet.

Ferner wird im Folgenden angenommen, dass der Anwender für die Instanz 2 eines Diagnose-Knotens zur Diagnose einer Pumpe 3 im Rohrleitungs- und Instrumentierungsdiagramm 1 einen Temperatursensor 4, der die Temperatur einer Anlagengebäudeheizung erfasst, einen Vibrationssensor 5, welcher die Vibration eines Pumpenmotors 6 erfasst, einen Drucksensor 7, der den Druck in einer durch die Pumpe 3 aufgebauten Leitungsdrucks erfasst, sowie einen Frequenzumrichter 8 (Aktuator bzw. Ansteuerung für den Pumpenmotor 6) selektiert, was in der Figur 1 durch gestrichelte Linien 9 angedeutet ist.

Diese Selektion bedeutet, dass zur Diagnose der Pumpe 3 der Zusammenhang zwischen dem Vibrationsverhalten des Pumpenmotors 6, dem durch die Pumpe 3 aufgebauten Leitungsdruck, der Ansteuerung des Pumpenmotors 6 und der Temperatur der Anlagengebäudeheizung zu analysieren ist, wobei die während des Anlagenbetriebs erfassten Sensor- bzw. Messwerte der selektierten Sensoren sowie des Aktors in Referenzen der Instanz 2 des Diagnose-Knotens zur Diagnose der Pumpe 3 hinterlegt werden.

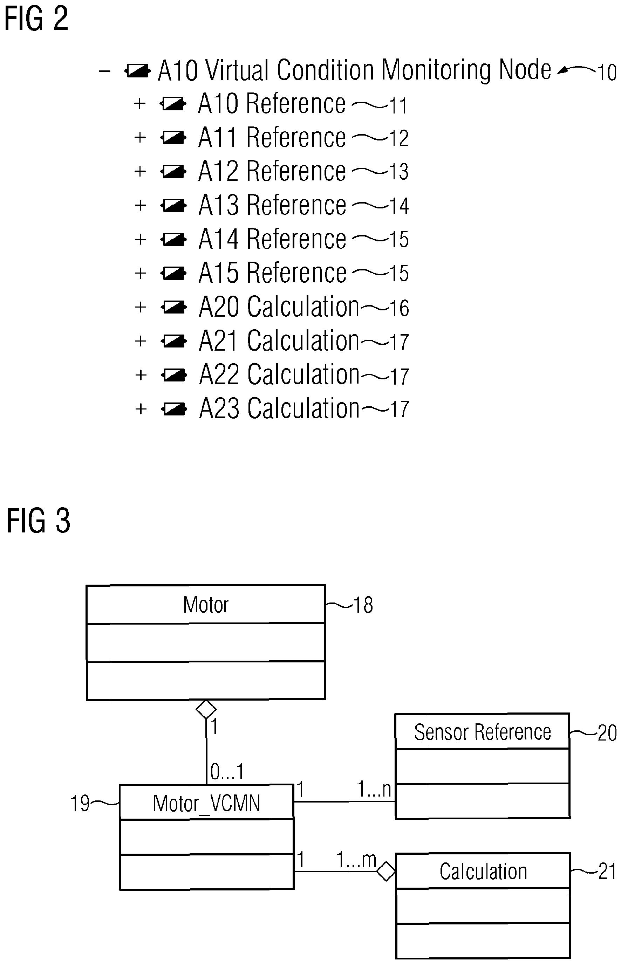

Figur 2 zeigt eine Liste 10 der Instanz 2 des Diagnose-Knotens. Diese Liste 10 weist eine Vielzahl von Referenzen auf, von denen eine Referenz 11 zur Hinterlegung der Messwerte des Temperatursensors 4, eine Referenz 12 zur Hinterlegung der Messwerte des Vibrationssensors 5, eine Referenz 13 zur Hinterlegung der Messwerte des Drucksensors 7 und eine Referenz 14 für die Werte der Ansteuerung 8 vorgesehen ist, wobei diese Werte das Automatisierungsgerät während der Prozesssteuerung in die Referenzen einschreibt bzw. hinterlegt. Es können selbstverständlich weitere Referenzen 15 zur Hinterlegung von Werten weiterer Anlagenkomponenten (Sensoren und/oder Aktoren) vorgesehen werden.

Ferner ist die Instanz 2 mit einem Auswerteobjekt 16 versehen, in welchem der Zusammenhang als Funktion definiert ist bzw. in welchem eine Verknüpfungslogik für die in den Referenzen 11 bis 14 hinterlegten Werte abgespeichert ist, wobei die Werte vor der Verknüpfung von dem Auswerteobjekt 16 in ein für die Verknüpfungslogik verarbeitbares Format umgesetzt werden.

Das Verknüpfungsergebnis der Verknüpfungslogik wird über eine Schnittstelle der Instanz 2 des Diagnose-Knotens einer übergeordneten Einheit zugeführt, wobei das Ergebnis geeignete Maßnahmen auslöst oder entsprechende Kenngrößen bereitstellt. Steigt z. B. die Vibration des Pumpenmotors bei gleichzeitigem Druckabfall in der Leitung an, könnte dies auf den baldigen Ausfall der Pumpe 3 hinweisen. Auch kann sich die Qualität eines herzustellenden Produkts verschlechtern, wenn z. B. die Temperatur der Gebäudeheizung sich gleichzeitig mit dem Druck in der Produktionsleitung verringert. Beide Ereignisse werden mittels der Instanz 2 ausgewertet und eine entsprechende Meldung an die übergeordnete Einheit weitergeleitet.

Um zu ermöglichen dass die in den Referenzen hinterlegten Werte unterschiedlich gewichtet und/oder unterschiedlich verknüpft werden können, sind weitere jeweils mit einer geeigneten Gewichtung und/oder Verknüpfungslogik ausgestattete Auswerteobjekte 17 vorgesehen.

Im Folgenden wird auf Figur 3 verwiesen, in welcher ein Objektmodell eines virtuellen Diagnose-Knotens dargestellt ist. Dieses Modell verdeutlicht in einer allgemeinen Form den Zusammenhang zwischen einer diagnoserelevanten Anlagenkomponente, z. B einer Anlagenkomponente in Form eines Motors 18, einem virtuellen Diagnose-Knoten 19 ("Motor_VCMN") und den damit assoziierten Sensorwerten als Referenzen 20 ("Sensor Reference") aus unterschiedlichen Quellen bzw. Sensoren. Ferner verdeutlicht dieses Modell auch die Format-Transformationen bzw. Umrechnungen der Sensorwerte sowie Berechnungen 21 ("Calculationen") für die Diagnosebetrachtung.

Wie erläutert, können diagnoserelevante Sensorwerte die Umgebungstemperatur, Luftfeuchtigkeit, Temperatur des Prozessmediums, Vibrationen am Motor, Motordrehzahl und/oder auch Stromaufnahme des Motors sein. Dementsprechend müssen daher bis zu n Sensorwerte durch den virtuellen Diagnose-Knoten 19 assoziiert werden können.

Jeder Sensorwert für sich alleine betrachtet, liefert gewöhnlich noch keine ausreichende Information über den Zustand einer diagnoserelevanten Anlagenkomponente. Deshalb werden zu jeder Instanz des Diagnose-Knotens auch Transformationen bzw. Umrechnungen sowie eine oder bis zu m Berechnungen 21 ("Calculationen") zugeordnet. Handelt es sich bei der diagnoserelevanten Anlagenkomponente beispielsweise um einen drehzahlvariablen Motor, so ist es im Kontext der Zustandsüberwachung bzw. Diagnose gewöhnlich nicht zielführend, nur das Sensorsignal eines Vibrationssensors auszuwerten, da die Vibration mit der Drehzahl des Motors schwankt. Berücksichtigt man aber zusätzlich die über einen anderen Sensor gemessene Drehzahl des Motors, so kann in der Berechnung eine drehzahlabhängige Betrachtung der Vibration erfolgen und bei jeder Drehzahl der Zustand des Motors überprüft werden.

Dadurch, dass im Planungs- und Engineering-Werkzeug für die jeweiligen zu überwachenden Anlagenkomponenten entsprechende Instanzen des Diagnose-Knotens mit Assoziationen zu Sensorwerten und Berechnungen angelegt werden, können diese Informationen schließlich durch ein entsprechendes Engineering im Sinne einer durchgängig digitalisierten Zustandsüberwachung (Condition Monitoring) berücksichtigt werden, um entsprechende Laufzeitkomponenten (Automatisierungsgeräte, Operator-Stationen, ...) für die Zustandsüberwachung mit verteilten Sensorwerten zu konfigurieren.

Eine intelligente Engineering-Schnittstelle eines Engineering-Systems, auf welchem das Planungs- und Engineering-Werkzeug ablauffähig ist, kann - wie im Folgenden gezeigt wird - dazu entsprechende Abbildungen der mit einem Diagnoseknoten assoziierten Berechnungen - abhängig von der Hardwarekonfiguration einer Automatisierungseinrichtung - vornehmen.

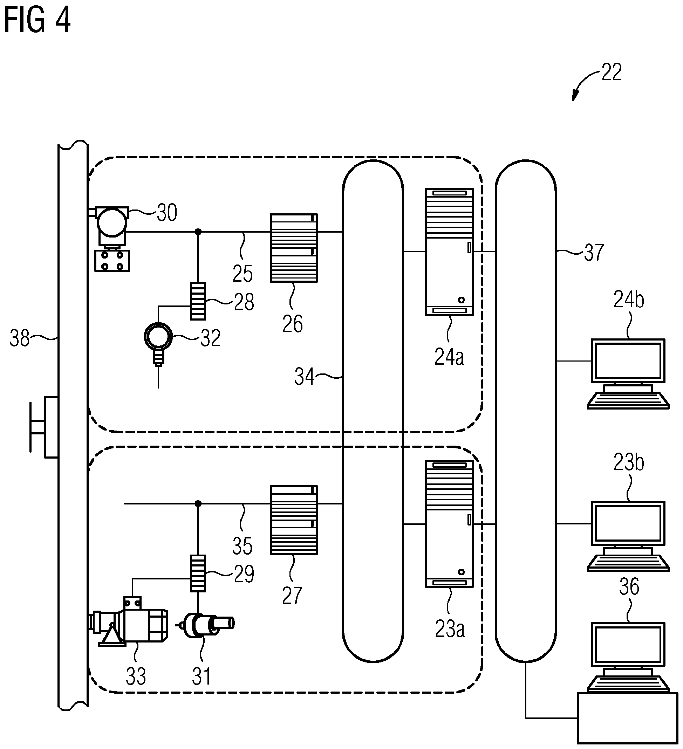

Zur näheren Erläuterung wird hierzu wird im Folgenden auf Figur 4 verwiesen, in der eine Automatisierungseinrichtung 22 dargestellt wird.

Diese Automatisierungseinrichtung 22 umfasst Operator-Server 23, 24, Operator-Clients 24a, 24b sowie weitere Automatisierungskomponenten. Diese weiteren Automatisierungskomponenten sind als Automatisierungsgeräte bzw. speicherprogrammierbare Steuerungen (PLC - Programmable Logic Controller) 26, 27, als dezentrale Peripherien 28, 29 sowie als Feldgeräte in Form eines Durchflussmessers 30, eines Vibrationssensors 31, eines Temperatursensors 32 und einer mit einem Motor versehenen Pumpe 33 ausgebildet. Die Automatisierungseinrichtung 22 kann selbstverständlich eine Vielzahl von Automatisierungsgeräten aufweisen, die einerseits über einen Plant Bus 34 mit den Operator-Servern 23a, 24a und andererseits über einen weiteren Bus 35, z. B. über einen so genannten Profibus DP, mit dem Durchflussmesser 30 und den dezentralen Peripherien 31, 32 verbunden sind. An die dezentralen Peripherien 31, 32 sind über geeignete (HART-) Schnittstellen die Sensoren 31, 32 sowie die Pumpe 33 und eine Vielzahl von weiteren hier nicht dargestellten Sensoren und/oder Aktuatoren angeschlossen. Die Operator-Server 23a, 24a, die mit dem Operator-Client 23b, 24b jeweils ein Operator-System bilden, und ein Engineering-System 36 zum Engineeren der Automatisierungseinrichtung kommunizieren über einen Terminal-Bus 37 mit weiteren, ebenfalls hier nicht dargestellten Komponenten der Automatisierungseinrichtung 1, beispielsweise Komponenten in Form eines Batchsystems oder eines Maintenance-Systems.

Aufgrund dieser Hardwarekonfiguration der Automatisierungseinrichtung 22 kann die intelligente Engineering-Schnittstelle folgende Abbildungen bzw. Zuordnungen der mit einem Diagnoseknoten assoziierten Berechnungen (digitalisierten Condition Monitoring) vornehmen:
- Zur Zustandsüberwachung der Pumpe33, die ein flüssiges Medium in eine Pipeline 38 pumpt, sind eine durch den Temperatursensor 32 erfasste Umgebungstemperatur, die Drehzahl des Motors der Pumpe 33 und die durch den Vibrationssensor 31 erfasste Vibration der Pumpe 33 relevant (Figur 3 - Sensor Reference).
- Dem Operator-System 23a, 23b ist das Automatisierungsgerät 27 zugeordnet, welche den zu überwachende Motor der Pumpe 33 steuert. Dementsprechend wird die Instanz des virtuellen Diagnoseknotens 19 auch als Datenpunkt in das Prozessabbild des Operator-Systems 23a, 23b geladen.
- Eine wie zuvor beschriebene Berechnung wird für die Zusammenführung der Motordrehzahl und Motorvibration benötigt; da beide Sensorwerte in der darüber liegenden Automatisierung (Automatisierungsgerät 27) vorhanden sind, wird diese Berechnung auch dort abgebildet.
- Die Umgebungstemperatur erfasst der Temperatursensor 32, welcher dem Operator-System 24a, 24 zugeordnet ist und kann von diesem Operator-System 24a, 24b bezogen werden. Eine weitere Berechnung, die die Umgebungstemperatur zusammen mit der Vibration des Motors berücksichtigen soll, kann dementsprechend nur auf dem Operator-System 23a, 23b (z.B. durch Scripting) abgebildet werden, da diesem Operator-System 23a, 23b der beobachtende Motor der Pumpe 3 zugeordnet ist.

Wie gezeigt, kann mittels der intelligenten Engineering-Schnittstelle (Automation Interface) eine automatische Abbildung beim Übergang von der Anlagenplanung (mittels des Planungs-und Engineerin-Werkzeug) in das weiteres Engineering-System 36 zum Engineeren der Automatisierungseinrichtung (bzw. eines Leitsystems) automatisiert - und voll digitalisiert - erfolgen.

## Patentansprüche

1. Planungs- und Engineering-Werkzeug für eine verfahrens- oder prozesstechnische Anlage, **dadurch gekennzeichnet, dass** das Werkzeug dazu ausgebildet ist, Instanzen (2) eines virtuellen Diagnose-Knotens zu erstellen, die zur Verarbeitung in ein Automatisierungsgerät (26, 27) oder in eine Bedien- und Beobachtungs-Station (23, 24) einer Automatisierungseinrichtung (22) ladbar sind, wobei die Instanzen (2) jeweils aufweisen
- eine Liste (10) von Referenzen (11 bis 15), welchen Sensoren (4, 5, 7; 30, 31, 32) und/oder Aktuatoren zugeordnet sind, deren Messwerte für die Diagnose einer Anlagenkomponente (3) relevant sind, wobei während der Prozesssteuerung aktuelle Messwerte in die Referenzen (11 bis 15) hinterlegt werden,
- mindestens ein Auswerteobjekt (16), in welchen die Verknüpfungslogik für die in den jeweiligen Referenzen (11 bis 15) hinterlegten Messwerte abgespeichert sind, wobei das Auswerteobjekt (16) die Messwerte in ein für die Verknüpfungslogik bearbeitbares Format umsetzt,
- eine Schnittstelle zur Übermittlung eines durch die Verknüpfungslogik ermittelten Verknüpfungsergebnisses an eine Einheit der Automatisierungseinrichtung.

2. Planungs- und Engineering-Werkzeug nach Anspruch 1, **dadurch gekennzeichnet, dass** das Werkzeug ferner dazu ausgebildet ist, in einem Rohrleitungs- und Instrumentierungsdiagramm (1) der Anlage, in welchem die für den Betrieb der Anlage erforderlichen Anlagenkomponente und deren Verbindungen symbolisch dargestellt sind, die Symbole für die den Referenzen (11 bis 15) zuzuordnenden Sensoren zu selektieren.

3. Planungs- und Engineering-Werkzeug nach Anspruch 1 oder 2, **dadurch gekennzeichnet, dass** die selektierbaren Sensoren vorgesehen sind zur Erfassung der Umgebungstemperatur der Anlagenkomponente, der Umgebungsluftfeuchtigkeit der Anlagenkomponente, der Vibration der Anlagenkomponente, der Drehzahl der Anlagenkomponente und/oder der Temperatur eines Prozessmediums.

4. Engineering-System mit einem Planungs- und Engineering-Werkzeug nach einem der Ansprüche 1 bis 3.
